# NEUE EUROPÄISCHE PATENTSCHRIFT

(11) **EP 1 522 508 B2**
(45) Veröffentlichungstag und Bekanntmachung des Hinweises auf die Entscheidung über den Einspruch: **11.11.2009**
(45) Hinweis auf die Patenterteilung: 17.01.2007
(21) Anmeldenummer: 04018531.6
(22) Anmeldetag: 05.08.2004
(51) Int. Cl.: B65G 47/84, B65G 47/32

(54) **Abteil-Synchronisations-und Verdichtungsvorrichtung**
Separating, synchronising and accumulating device
Dispositif de séparation, de synchronisation et d'accumulation

(30) Priorität: 09.10.2003 DE 10347540
(43) Veröffentlichungstag der Anmeldung: 13.04.2005
(73) Patentinhaber: KHS AG, 44143 Dortmund (DE)
(72) Erfinder: Wagner, Stefan, 46509 Xanten (DE); Willemsen, Stefan, 47652 Weeze (DE); Cox, Bernd, 47652 Weeze (DE); van Triel, Manfred, 46509 Xanten (DE)
(74) Vertreter: Nunnenkamp, Jörg

(56) Entgegenhaltungen:
- EP-A- 0 455 320
- EP-A- 0 659 664
- DE-C- 4 204 993
- DE-U- 9 310 937
- JP-A- 10 181 714
- US-A- 4 101 020
- US-A- 4 998 399
- US-A- 5 667 055

## Beschreibung

Die vorliegende Erfindung betrifft eine Vorrichtung zum Abteilen, Synchronisieren und Verdichten von Artikeln gemäß dem Oberbegriff des Anspruchs 1.

Vorrichtungen dieser Art werden innerhalb von Verpackungsmaschinen benötigt, um aus in geschlossenen Reihen zulaufenden Artikelströmen einzelne Artikelgruppen oder Artikel zu bilden bzw. abzutrennen, welche nachfolgend in Kartons, Kästen, Trays und/oder Schrumpffolie verpackt werden.

Dieser Verpackungsprozess besteht aus mehreren Teilprozessen, wobei es Stand der Technik ist, für die Durchführung dieser Teilprozesse jeweils einzelne Maschinen, zumindest aber einzelne, abgeschlossene Baugruppen oder Module einzusetzen.

Zunächst wird der Artikelstrom, wobei es sich um Behälter oder Güter aller Art wie z.B. Flaschen, Tüten, Dosen, Kartons, Beutelverpackungen usw. handeln kann, durch einen Transporteur der Abteilvorrichtung zugeführt.

Bei diesem Transporteur handelt es sich in der Regel um eine, mit einem breiten Transportband ausgestattete Vorrichtung, welche zusätzlich mit aus Blech bestehenden Führungen ausgestattet ist, wobei diese über dem Transportband angeordnete Gassen bilden.

Diese Gassen wiederum unterteilen den zunächst ungeordnet einlaufenden Artikelstrom in sogenannte Reihen.

Durch eine geeignete Abteilvorrichtung wird von diesem, in den einzelnen Gassen auf Stoß stehenden Artikelstrom die gewünschte Artikelmenge abgeteilt, wobei sich die Artikelmenge durch die Multiplikation der Anzahl der Reihen in Laufrichtung mit der Anzahl der Reihen quer zur Laufrichtung ergibt. Die abgeteilten Reihen in Laufrichtung ergeben in Verbindung mit den Reihen quer zur Laufrichtung das so genannte Format welches anschließend verpackt werden soll.

Um die nachfolgende Verpackung des erzeugten Formats überhaupt zu ermöglichen, ist es erforderlich, zwischen erzeugtem Format und nachfolgendem Artikelstrom eine Lücke zu erzeugen. Dieses geschieht in der Regel dadurch, dass der Artikelstrom mit unveränderter Geschwindigkeit fortbewegt wird, während das erzeugte Format mit erhöhter Geschwindigkeit weitertransportiert wird.

Den nächsten Prozessschritt stellt die so genannte Verdichtung dar, welche dazu dient, die innerhalb des Formats durch die Führungen und eventuelle Verschiebungen der Artikel untereinander entstandene Lücken zu schließen. Hierzu wird das Format anhand einer geeigneten Vorrichtung durch sich verengende Außenführungen bewegt, wodurch die durch die Führungen erzeugten Lücken geschlossen werden. Gleichzeitig oder aber auch anschließend wird das Format vom Transporteur ab- und auf ein feststehendes Blech aufgeschoben, was zur Folge hat, dass die innerhalb der Reihen in Laufrichtung vorhandenen Lücken ebenfalls geschlossen werden.

Eine weitere wichtige Funktion welche während des Verdichtens durchgeführt wird ist die teilungsgerechte Positionierung oder aber auch Synchronisation des Formats mit dem Maschinentakt. Dieses ist erforderlich, da es bedingt durch das Auf-, Ab- und Überschieben der Artikel bzw. des Formats von oder nach bewegten oder feststehenden Vorrichtungskomponenten, immer wieder zu räumlichen Verschiebungen kommen kann, welche zur Folge haben, dass sich das Format nicht an der Stelle befindet, an der es gemäß des geplanten Bewegungsablaufes sein müsste.

Anschließend erfolgt die Verpackung des so verdichteten Formats.

Zur Realisierung der oben beschriebenen Abläufe sind in der Vergangenheit zahlreiche Vorschläge unterbreitet worden, wobei allen bekannten Vorschlägen gemeinsam ist, dass zumindest für die Funktionen Abteilen und Verdichten/Synchronisieren eigene, abgeschlossene Baugruppen bzw. Module verwendet werden, was einen hohen konstruktiven und fertigungstechnischen Aufwand und damit verbunden auch entsprechend hohe Kosten bedeutet.

Ebenfalls haben Vorrichtungen welche dem Stand der Technik entsprechen, aufgrund der zahlreichen Module aus denen sie bestehen, einen großen Platzbedarf.

Eine entsprechende Vorrichtung wurde z.B. mit der DE 695 00 173 vorgestellt.
Bei dieser Vorrichtung werden einzelne Artikelreihen des Artikelstromes zunächst durch von unten in den Artikelstrom eintauchende, fingerförmige Elemente abgeteilt und weitertransportiert. Anschließend senkt sich die Synchronisationsvorrichtung von oben zwischen die abgeteilten Artikelreihen und beginnt diese zu schieben und somit zu synchronisieren.

Dabei besteht diese Synchronisationsvorrichtung aus beidseitig des Behälterstromes angeordneten, parallel verlaufenden, synchron angetriebenen Ketten, wobei an diesen Ketten mehrere Stäbe derart angeordnet sind, dass diese Stäbe quer zur Transportrichtung verlaufen und somit durch ihre Vorwärtsbewegung die Artikel mitnehmen und synchronisieren.

Als Besonderheit ist bei dieser Vorrichtung zu bemerken, dass zu Beginn der Synchronisation zwei Kettenpaare ineinander greifen, wodurch zunächst jede einzelne Artikelreihe durch einen eigenen Querstab transportiert wird. Nach einer bestimmten Wegstrecke wird eines der beiden Kettenpaare aus dem Artikelstrom herausgeführt, so dass im weiteren Verlauf der Wegstrecke nur noch das verbliebene Kettenpaar die nachfolgende Verdichtung und Synchronisation durchführt, was auch zur Folge hat, dass mehrere Querreihen (Artikelreihen quer zur Laufrichtung) von einem Querstab transportiert werden, wodurch schließlich das eigentliche Format gebildet wird.

Nachteilig an einer derartigen Vorrichtung ist, dass eine Änderung des erzeugten Formates nur durch die Montage bzw. Demontage von zahlreichen Querstäben möglich ist. Darüber hinaus lassen sich durch das Ineinandergreifen der beiden Kettenpaare und die weiteren konstruktiven Merkmale der Vorrichtung nicht alle gewünschten Formate erzeugen.

Ebenfalls wurde eine Vorrichtung nach der US 3,194,382 vorgestellt. Bei dieser Vorrichtung werden alle für ein Format erforderlichen Querreihen direkt bei der Abteilung auf einmal vom Artikelstrom abgeteilt. Die Abteilung erfolgt auch bei diesem Vorschlag durch von unten in den Artikelstrom eintauchende Elemente.
Synchronisation und Verdichtung erfolgen durch ein oberhalb der Transportebene angeordnetes Kettenpaar, welches ebenfalls mit Querstäben versehen ist.
Auch bei dieser Vorrichtung ist es von großem Nachteil, dass Änderungen des Formats nur durch umfangreiche Umbauten, insbesondere der Abteileinheit, wo neben einem Wechsel der verwendeten Ketten auch ein Versetzen der entsprechenden Kettenumlenkrolle erforderlich ist, erreicht werden können.

Ebenfalls bekannt wurde eine Vorrichtung nach der DE 298 07 979. Auch diese Vorrichtung arbeitet mit getrennten Baugruppen für Abteilung und Synchronisation/Verdichtung, wobei für die Abteilung der Artikelgruppen eine spezielle Vorrichtung vorgeschlagen wird. Für die Abteileinheit ist vorgesehen, anstatt der bekannten Führungsbleche Führungsbahnen anzuordnen, wobei diese Führungsbahnen in solcher Zahl vorgesehen sind, dass jede Längsreihe der Artikel beidseitig von Führungsbahnen umgeben ist. Diese Führungsbahnen werden in zwei kompletten Sätzen ausgeführt, wobei jeder Satz in einer eigenen Höhenebene angeordnet wird und wobei sich diese Sätze in zwei übereinander liegenden Höhenebenen befinden.

Auf jeder Führungsbahn befindet sich ein so genannter Linearschlitten, welcher mit ein- und ausfahrbaren Rückhaltehebeln versehen ist.

Alle Linearschlitten werden über je eine mit ihnen verbundene Antriebskette angetrieben, wobei alle Linearschlitten eines Satzes bzw. einer Höhenebene durch einen gemeinsamen Servomotor angetrieben und synchron bewegt werden.

Dadurch, dass die Linearschlitten der verschiedenen Sätze auf unterschiedlichen Höhenebenen angeordnet sind, können sie völlig unabhängig voneinander vor und zurück bewegt werden.

Die Abteilung der Artikelgruppen erfolgt dadurch, dass ein erster Satz Linearschlitten mit ausgefahrenen Rückhaltehebeln eine Vorwärtsbewegung ausführt und dabei den nachdrängenden Artikelstrom gegenüber dem mit höherer Geschwindigkeit laufenden Transportband zurückhält. Zeitgleich führt ein zweiter Satz Linearschlitten mit eingefahrenen Rückhaltehebeln eine Rückwärtsbewegung aus.

Hat dieser zweite Satz Linearschlitten den Endpunkt der Rückwärtsbewegung erreicht, so werden die Rückhaltehebel ausgefahren wodurch eine Artikelgruppe vom Artikelstrom abgeteilt wird. Sind die Rückhaltehebel ausgefahren, so gibt der erste Satz Linearschlitten durch das Einfahren seiner Rückhaltehebel die Vorderkante der soeben gebildeten Artikelgruppe frei, welche alsdann mit der höheren Transportbandgeschwindigkeit weitertransportiert wird und somit gleichzeitig eine Lücke zum nachfolgenden, aber vom zweiten Satz der Linearschlitten zurückgehaltenen Artikelstrom ausbilden kann.

Die anschließende Verdichtung/Synchronisation der Artikelgruppe erfolgt in einer eigenen Vorrichtung auf bekannte Weise.

Nachteilig an einer derartigen Vorrichtung ist, dass der in den meisten Fällen bereits eng zusammenstehende Artikelstrom zunächst auseinander geführt werden muss, da die Linearschlitten u.a. zwischen den einzelnen Längsreihen angeordnet sind.
Weitere Schwierigkeiten ergeben sich aufgrund dieser Anordnung dadurch, dass im Rahmen der Verdichtung sehr große Lücken abgebaut werden müssen, was insbesondere bei kippempfindlichen Artikeln zu häufigem Umfallen selbiger führt, was in der Praxis äußerst unerwünscht ist.

Des weiteren bereitet die Verarbeitung von Artikeln mit einer quadratischen Querschnittsfläche große Schwierigkeiten, da sich eine geschlossene Außenfläche ausbildet wenn mehrere derartige Artikel auf Stoß hintereinander stehen, wodurch kein geeigneter Eingriffspunkt für die Rückhaltehebel vorhanden ist.

Ebenfalls ist der große mechanische und monetäre Aufwand einer solchen Vorrichtung eindeutig als Nachteil anzusehen.

Aufgabe und Ziel der vorliegenden Erfindung ist es, die oben dargestellten Nachteile zu vermeiden und eine Vorrichtung zu schaffen, welche es gestattet, die erforderlichen Kosten, die Anzahl der Bauteile und den Raumbedarf deutlich zu reduzieren. Dazu ist vorgesehen, die Abteileinheit und die Verdichtungs-/Synchronisationseinheit zu einer Einheit zusammen zu fassen. Gelöst wird diese Aufgabe durch die kennzeichnenden Merkmale des Anspruchs 1.

Im Nachfolgenden wird die vorliegende Erfindung anhand von Ausführungsbeispielen näher erläutert.

Im Einzelnen zeigt die
- Figur 1:: in einer vereinfachten, perspektivischen Darstellung eine erfindungsgemäße Vorrichtung und die
- Figur 2a bis 2g: in einer ebenfalls vereinfachten Darstellung einen erfindungsgemäßen Bewegungsablauf.

Weiterbildungen, Vorteile und Anwendungsmöglichkeiten der Erfindung ergeben sich aus der nachfolgenden Beschreibung von Ausführungsbeispielen und der Zeichnung. Gleichzeitig wird der Inhalt der Ansprüche zu einem Bestandteil der Beschreibung gemacht.

Für eine erfindungsgemäße Abteil- und Synchronisierungsstation ist mindestens ein Paar Antriebselemente 1 vorgesehen, an welchem mindestens ein Querstab 2 angeordnet ist.

Bei diesen Antriebselementen kann es sich z.B. um aus Metall oder auch einem anderen geeigneten Werkstoff gefertigte Ketten, insbesondere auch um so genannte Rollengliederketten handeln. Ebenfalls ist auch die Verwendung von Zahnriemen vorgesehen, wobei insbesondere solche Zahnriemen vorgesehen sind, an welchen mittels geeigneter Elemente der oben erwähnte Querstab 2 befestigt werden kann.

Unter einem Paar Antriebselemente 1 sind in diesem Zusammenhang die Antriebselemente zu verstehen, welche von einem gemeinsamen Antriebsmotor angetrieben werden und wobei sich eines dieser Antriebselemente 1 links und eine Antriebselement 1 rechts vom Weg der abzuteilenden bzw. bereits abgeteilten Artikelgruppen befindet.

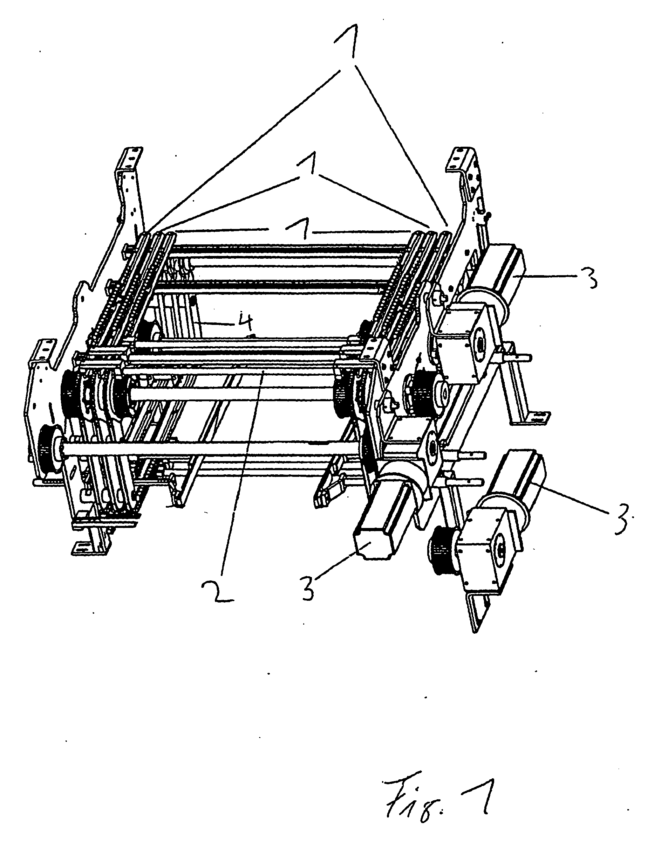

Im, in der Figur 1 dargestellten Ausführungsbeispiel wurden als Antriebselemente 1 Rollengliederketten gewählt. Insgesamt wurden drei Paare Antriebselemente 1 umlaufend angeordnet, wobei an jedem Antriebselement 1 zwei Querstäbe 2 montiert sind.

Die Realisierung von Varianten mit Anzahlen von Paaren Antriebselementen 1 und Anzahlen von Querstäben 2, welche vom dargestellten Ausführungsbeispiel abweichen, führen nicht dazu, dass der Umfang der vorliegenden Anmeldung verlassen wird.

Jedes der Paare Antriebselemente 1 wird durch einen eigenen Motor 3 angetrieben, wobei es sich bei diesem Motor z.B. um einen elektrisch betriebenen Schritt-, Servo- oder Synchronmotor handeln kann. Dabei ist allen Motorarten gemeinsam, dass Drehwinkel, Drehrichtung und Drehgeschwindigkeit durch einen Rechner oder eine andere geeignete Steuervorrichtung vorgegeben werden und dass die Einhaltung dieser Soll-Werte durch geeignete Überwachungsvorrichtungen wie z.B. Drehgebern überwacht und zur nachfolgenden Auswertung weitergemeldet werden.

Zusätzlich ist für die Ansteuerung bzw. den Betrieb dieser Motoren vorgesehen, dass Drehgeschwindigkeit und/oder Drehrichtung des Motors und somit auch Bewegungsgeschwindigkeit und/oder Bewegungsrichtung der von diesem Motor angetriebenen Paares Antriebselemente 1 auch innerhalb eines bzw. eines halben Umlaufs der Antriebselemente 1 an verschiedene Soll-Werte angepasst werden können. Dabei ist ebenfalls vorgesehen, dass die Bewegungsgeschwindigkeit der Antriebselemente 1 auch den Wert Null m/s erreichen kann, wobei dieser Wert der Geschwindigkeit nicht nur während eines eventuellen Wechsels der Bewegungsrichtung zwangsweise erreicht wird, sondern auch gezielt für ein bestimmtes Zeitintervall vorgegeben werden kann.

Die Länge eines Arbeitszyklusses wird von der Anzahl der an einem Paar Antriebselemente 1 montierten Querstäbe 2 bestimmt. Ist jeweils nur ein Querstab 2 montiert, so entspricht ein Arbeitszyklus einem Umlauf der Antriebselemente 1. Sind hingegen zwei Querstäbe 2 montiert, so entspricht ein Arbeitszyklus einem halben Umlauf der Antriebselemente 1.

Im dargestellten Ausführungsbeispiel erfolgte die konstruktive Auslegung derart, dass sich die einzelnen Antriebselemente 1, aufgrund der auf einer gemeinsamen Höhenebene angeordneten Querstäbe 2, nicht gegenseitig überholen können. In einer weiteren Ausgestaltung der vorliegenden Erfindung ist vorgesehen, Antriebselemente 1 und/oder Querstäbe 2 derart anzuordnen, dass diese sich gegenseitig überholen können.

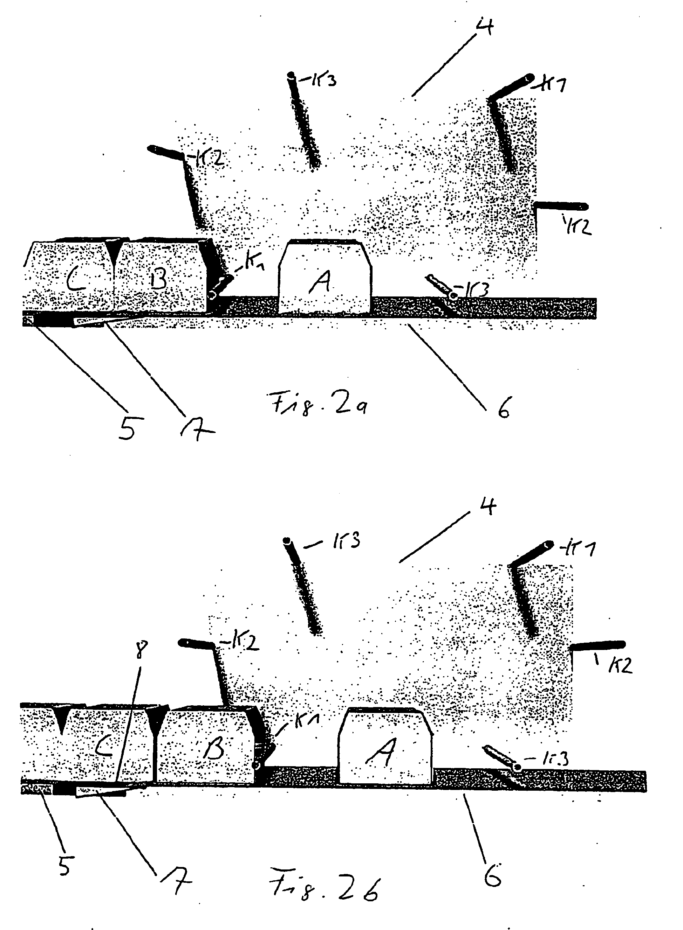

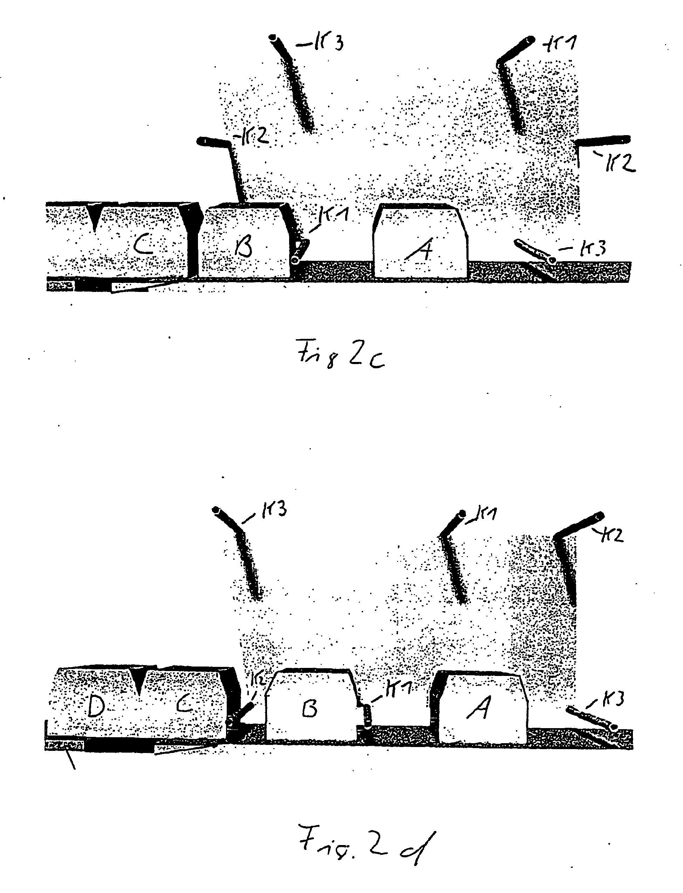

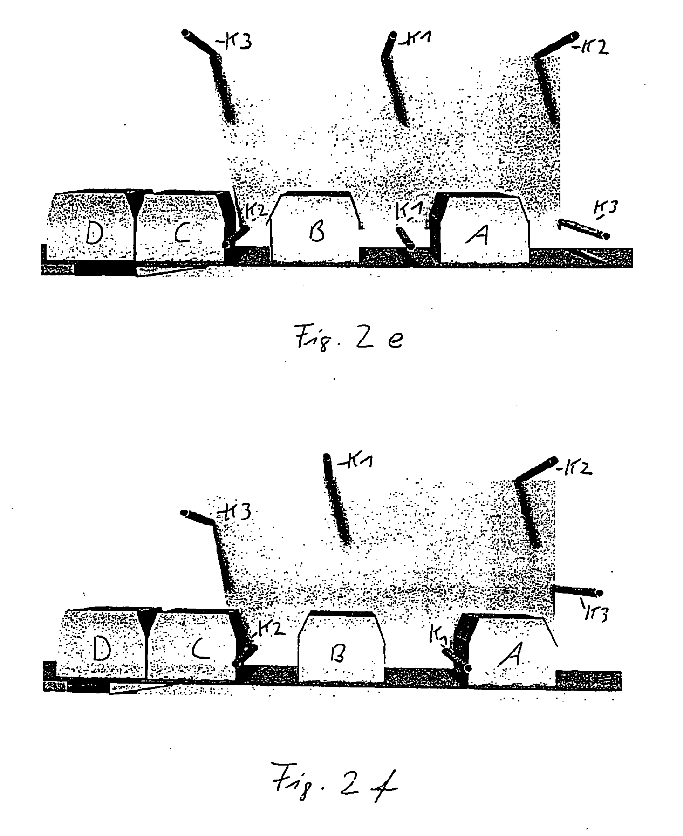

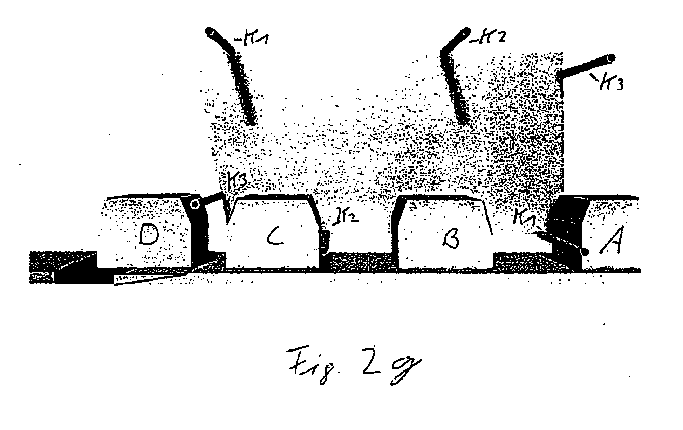

In der Figur 2 ist in den Einzeldarstellungen 2a bis 2g der besonders vorteilhafte Bewegungsablauf der vorliegenden Erfindung dargestellt. Dabei wurde zur Vereinfachung der graphischen Darstellung darauf verzichtet, die zu verpackenden Artikel, im vorliegenden Ausführungsbeispiel z.B. Flaschen, einzeln abzubilden. Anstatt dessen wurden lediglich die Hüllkörper der abgeteilten bzw. nachfolgend noch abzuteilenden Artikelgruppen ( z.B. Fig. 2a, Pos B und C, oder Fig. 2d, Pos C und D) dargestellt.

Innerhalb der Figur 2 wurde auf eine explizite Darstellung der drei Antriebselemente 1 verzichtet, es wurde in einer Prinzipskizze lediglich die Bewegungsbahn 4 der Antriebselemente 1 dargestellt. Die an den drei Antriebselementen 1 befestigten Querstäbe 2 wurden entsprechend ihrer Zugehörigkeit zu einem Antriebselemente 1 gekennzeichnet. So sind z.B. die Querstäbe 2 mit der Kennzeichnung K2 an dem zweiten Antriebselement 1 befestigt, die Querstäbe 2 mit der Kennzeichnung K3 entsprechend an dem dritten Antriebselement 1.

Die abzuteilenden und zu synchronisierenden Artikel werden der Abteil-, Synchronisierungs- und Verdichtungsvorrichtung durch einen Einlaufförderer 5 zugeführt, wobei die Artikel durch kontinuierliches Fördern des Einlaufförderers 5 innerhalb der Abteileinheit permanent unter Staudruck gehalten werden und somit das Bestreben haben sich in Förderrichtung zu bewegen.

Innerhalb der Vorrichtung werden die Artikel durch den Einlaufförderer 5 zunächst auf eine feststehende, nicht bewegliche Komponente, z.B. ein Blech 8 o.ä., aufgeschoben. Unterhalb dieses Bleches befindet sich ein Aufschubkeil 7, welcher einen gesteuerten Bewegungsablauf ausführt. Dieser Bewegungsablauf setzt sich aus einer Vor- und Rückbewegung mit jeweils unterschiedlichen, nicht zwingend konstanten Geschwindigkeiten und eventuellen, zusätzlichen definierten Stillstandsphasen zusammen.

An das Blech 8 bzw. den Aufschubkeil 7 schließt sich der Hauptförderer 6 an. Dieser Hauptförderer 6 wird mit einer konstanten Geschwindigkeit betrieben, welche größer ist als die des Einlaufförderers 5.

Nachfolgend werden die wesentlichen Bestandteile des Bewegungsablaufes einer erfindungsgemäßen Vorrichtung beispielhaft, aber den Umfang der vorliegenden Erfindung nicht beschränkend, dargestellt. Abweichungen vom dargestellten Bewegungsablauf, der Verzicht auf oder das Hinzufügen von Bewegungsabschnitten und/oder verwendeten Komponenten führt nicht dazu, dass der Schutzbereich der vorliegenden Erfindung verlassen wird.

Wie in der Figur 2a dargestellt, wird der nachfolgende Artikelstrom durch den Einlaufförderer 5 unter Staudruck gehalten, so dass die nachfolgend abzuteilenden Artikelgruppen B und C zunächst lückenlos aneinander anschließen. Für die eigentliche Abteilung übernimmt der Aufschubkeil 7 eine bedeutende Funktion. Während der Vorwärtsbewegung des zulaufenden Artikelstromes fährt der Aufschubkeil 7 ebenfalls aus und trägt während dieser Vorwärtsbewegung die abzuteilende Artikelgruppe B wodurch verhindert wird, dass diese Artikelgruppe in Kontakt mit dem Hauptförderer 6 kommt.

Der Kontakt der abzuteilenden Artikelgruppe B mit dem Hauptförderer 6 muss zunächst verhindert werden, da der Hauptförderer 6 mit einer höheren Bandgeschwindigkeit als der Einlaufförderer 5 betrieben wird und ein vorzeitiger Kontakt aufgrund der Geschwindigkeitsdifferenz eine vorzeitige und somit unerwünschte Lückenbildung innerhalb der abzuteilenden Artikelgruppe zur Folge hätte.

Ist die Länge der abzuteilenden Artikelgruppe größer als die wirksame Länge des Aufschubkeils 7, steht also schon ein Teil der Artikelgruppe auf dem Hauptförderer 6, so verhindert der sich mit der Geschwindigkeit des Einlaufförderers 5 bewegende Querstab K1 eine Lückenbildung innerhalb dieser Artikelgruppe.

Befindet sich die abzuteilende Artikelgruppe B weit genug über oder auf dem Hauptförderer 6, so führt der Aufschubkeil 7 eine Rückwärtsbewegung aus, wodurch die gesamte abzuteilende Artikelgruppe B auf dem Hauptförderer 6 abgestellt wird und somit die höhere Geschwindigkeit des Hauptförderers 6 annimmt. Da auch der Querstab K1 zu diesem Zeitpunkt die höhere Geschwindigkeit des Hauptförderers 6 annimmt, kommt es zur gewünschten Lückenbildung zur nachfolgenden Artikelgruppe C.
Die Rückwärtsbewegung des Aufschubkeils 7 endet an der Vorderkante der nachfolgend abzuteilenden Artikelgruppe C. Ist diese Vorderkante erreicht, so folgt der Aufschubkeil 7 wiederum der Vorwärtsbewegung der Artikelgruppe C, wobei er diese mit der selben Geschwindigkeit wie die Artikelgruppe C ausführt (siehe Fig. 2b).

Ist die Lücke zwischen der Artikelgruppe B und C groß genug (siehe Fig. 2c und Fig. 2d), so taucht der nächste Querstab 2, hier K2, in die entstandene Lücke ein und verhindert eine vorzeitige Lückenbildung innerhalb der nachfolgenden Artikelgruppe C, wobei sich der Querstab K2 nach dem Eintauchen in die Lücke im Wesentlichen mit der Geschwindigkeit des Einlaufförderers 5 in Vorschubrichtung bewegt. Gleichzeitig fährt der Aufschubkeil 7 weiter aus, wobei er weiterhin den Kontakt zur Vorderkante der Artikelgruppe C hält und verhindert, dass diese Artikelgruppe schon in Kontakt zum Hauptförderer 6 kommt.

Wurde die vorhergehende Artikelgruppe B durch den Hauptförderer eine bestimmte Wegstrecke transportiert, so wird die Geschwindigkeit des zugeordneten Querstabes K1 erhöht, wodurch sich dieser von der Artikelgruppe B entfernt.

Wie in den Figuren 2e und 2f dargestellt, wird der Querstab K1 solange mit einer gegenüber dem Hauptförderer 6 erhöhten Geschwindigkeit bewegt, bis der Querstab die Rückseite der vorhergehenden Artikelgruppe A erreicht. Ist die Rückseite erreicht, so nimmt der Querstab K1 wieder die Geschwindigkeit des Hauptförderers 6 an und schiebt die Artikelgruppe A durch die nicht dargestellte Verdichtungseinheit.

Diese Verdichtungseinheiten gehören zum Stand der Technik und bestehen üblicher Weise aus beidseitig des Weges der Artikelgruppe angeordneten Führungsblechen welche einen trichterförmigen Engpass bilden, wodurch innerhalb der Querreihen der Artikelgruppe vorhandene Lücken geschlossen werden. Innerhalb der Längsreihen vorhandene Lücken werden durch das Aufschieben der Artikelgruppe auf eine feststehende Komponente, z.B. einem Blech, geschlossen, wobei der Querstab K1 durch Schieben die Vorwärtsbewegung der Artikelgruppe bewirkt.

Hat der Querstab K1 die Artikelgruppe anschließend wieder von der feststehenden Komponente abgeschoben, so sind alle innerhalb der Artikelgruppe vorhandenen Lücken geschlossen und die Artikelgruppe ist genau positioniert und mit dem Maschinentakt synchronisiert. Anschließend wird der Querstab aus der Ebene der Artikelgruppen herausgeführt.

Neben des bereits oben beschriebenen Vorteils, dass Abteil-, Synchronisierungs- und Verdichtungsstation in nur einem Modul realisiert werden, ergeben sich durch die überaus vorteilhafte Ausgestaltung der vorliegenden Erfindung weitere Vorteile.

So ist z.B. die Veränderung der zu erzeugenden Formate insbesondere bei konstanter Anzahl der Querreihen auf einfache Art und Weise möglich, da zur Veränderung der Anzahl der Längsreihen lediglich eine Anpassung der programmierten Bewegungsabläufe von Antriebsketten 1 und Aufschubkeil 7 erforderlich ist, was quasi per "Knopfdruck" und ohne mechanische Umstellungen an der Verpackungsmaschine selbst erfolgen kann.

Zur Realisierung dieser Funktion ist vorgesehen, die erforderlichen Bewegungsprofile von Antriebselementen 1 und Aufschubkeil 7 und sonstige Steuerungsparameter, wie z.B. Geschwindigkeiten der Förderer 5,6, für jedes gewünschte Format und/oder jeden zu verarbeitenden Artikel in der Maschinensteuerung derart zu speichern, dass relevanten Daten leicht vom Bedienungspersonal abgerufen werden können.

Besonderen Nutzen entfalten die Vorteile der vorliegenden Erfindung bei an sich unveränderten Formaten, insbesondere auch bei häufigen Artikelwechseln, da verschiedene Artikel in der Regel auch unterschiedliche Abmessungen aufweisen, was bei bekannten Verpackungsvorrichtungen aufwändige und zeitraubende Einstellarbeiten erforderlich macht, welche bei einer erfindungsgemäßen Vorrichtung nahezu vollständig entfallen.

Durch die Zusammenfassung der Funktionen Abteilung, Synchronisation und Verdichtung zu einem Modul lässt sich eine bedeutende Reduzierung der erforderlichen Maschinenlänge erreichen, was aufgrund der nicht unerheblichen Raumkosten eine weitere beträchtliche Kosteneinsparung ermöglicht.

Durch die überaus vorteilhafte Gestaltung der vorliegenden Erfindung ergibt sich noch ein weiterer bedeutender Vorteil.
Da es bei einer erfindungsgemäßen Vorrichtung nicht erforderlich ist, Bauteile innerhalb des Weges der abgeteilten Artikelgruppen anzuordnen, ergibt sich die Möglichkeit, zumindest den Hauptförderer 6 als ein einteiliges, eine geschlossene Oberfläche aufweisendes, breites Transportband auszubilden. Durch diese Vorgehensweise ergibt sich gegenüber dem Stand der Technik, bei dem es üblich ist, den Hauptförderer 6 aus mehreren, parallel laufenden, schmalen Transportbändern zu bilden, der Vorteil, dass keine Störungen der Oberfläche vorhanden sind, welche während des Transportes oder aber auch insbesondere während der Verdichtung die Ursache für das Umfallen der Artikel sein können.

## Patentansprüche

1. Abteil-, Synchronisierungs- und Verdichtungsvorrichtung zur Verpackung von Artikel aller Art mit mindestens einem Einlaufförder (5), mindestens einem Aufschubkeil (7), mindestens einem Hauptförderer (6) und mindestens einer Verdichtungseinheit, wobei die Geschwindigkeit des Hauptförderers (6) größer ist als die des Einlaufförderers, mit mindestens einem umlaufend angeordneten Paar Antriebselementen (1), mit mindestens einem an jedem Paar Antriebselemente (1) angeordneten Querstab (2), mit je einem gesteuerten Antriebsmotor (3) je Paar Antriebselemente (1), **dadurch gekennzeichnet, dass** das mindestens eine Paar Antriebselemente (1) einen gesteuerten, unterschiedliche Geschwindigkeiten aufweisenden Bewegungsablauf aufweist, wobei die konstruktive Gestaltung der Vorrichtung derart ist, daß die Abteilung von dem vor- und zurückbeweglichen Aufschubkeil (7) und die Synchronisierung und Verdichtung der Artikel von dem mindestens einen Paar Antriebselemente (1) durchgeführt werden, und wobei die Geschwindigkeit des Hauptförderers (6) Konstant ausgebildet ist.

2. Vorrichtung nach Anspruch 1, **dadurch gekennzeichnet, dass** die konstruktive Gestaltung der Vorrichtung derart ist, dass sich die an verschiedenen Paaren Antriebselemente (1) angeordneten Querstäbe (2) gegenseitig nicht überholen können.

3. Vorrichtung nach einem der Anspruch 1 oder 2, **dadurch gekennzeichnet, dass** die konstruktive Gestaltung der Vorrichtung derart ist, dass sich die an verschiedenen Paaren Antriebselemente (1) angeordneten Querstäbe (2) gegenseitig überholen können.

4. Vorrichtung nach einem der Ansprüche 1 bis 3, **dadurch gekennzeichnet, dass** es sich bei dem mindestens einen Paar Antriebselemente (1) um Ketten handelt.

5. Vorrichtung nach einem der Ansprüche 1 bis 3, **dadurch gekennzeichnet, dass** es sich bei dem mindestens einen Paar Antriebselemente (1) um Zahnriemen handelt.

6. Vorrichtung nach einem der Ansprüche 1 bis 5, **dadurch gekennzeichnet, dass** die Vorrichtung Mittel beinhaltet, welche es ermöglichen, die Vorwärts- und die Rückwärtsbewegung des Aufschubkeils (7) mit unterschiedlichen, gesteuerten Geschwindigkeiten auszuführen.

7. Vorrichtung nach einem der Ansprüche 1 bis 6, **dadurch gekennzeichnet, dass** sowohl der Einlaufförderer (5) als auch der Hauptförderer (6) jeweils mit einem eigenen Antriebsmotor ausgestattet sind.

8. Vorrichtung nach einem der Ansprüche 1 bis 7, **dadurch gekennzeichnet, dass** der Hauptförderer 6 als ein einteiliges, eine im Wesentlichen geschlossene Oberfläche aufweisendes, breites Transportband ausgeführt ist.

9. Verfahren zum Betrieb einer Vorrichtung nach einem der Ansprüche 1 bis 8, **dadurch gekennzeichnet, dass** der Bewegungsablauf des mindestens einen Paares Antriebselemente (1) und/oder der mindestens einen Querstange (2) während eines Arbeitszyklusses unterschiedliche Geschwindigkeiten aufweist.

10. Verfahren nach Anspruch 9, **dadurch gekennzeichnet, dass** der mindestens eine Querstab (2) die abzuteilende Artikelgruppe zunächst gegenüber dem Hauptförderer (6) zurückhält, sich anschließend mit erhöhter Geschwindigkeit vorbewegt, die zuvor abgeteilten Artikelgruppe nach dem Erreichen dieser mit dem Arbeitstakt der Vorrichtung synchronisiert und diese Artikelgruppe anschließend durch eine Verdichtungseinheit schiebt.

11. Verfahren nach Anspruch 10, **dadurch gekennzeichnet, dass** sich der mindestens eine Querstab (2) nach der Abteilung einer Artikelgruppe zunächst mit einer Geschwindigkeit ähnlich der des Hauptförderers (6) bewegt, sich anschließend mit einer höheren Geschwindigkeit vorbewegt, und sich anschließend wieder mit einer Geschwindigkeit ähnlich der des Hauptförderers (6) bewegt.

12. Verfahren nach einem der Ansprüche 9 bis 11, **dadurch gekennzeichnet, dass** die Anpassung der Vorrichtung an veränderte Formate und/oder veränderte Artikelabmessungen bei unveränderter Anzahl der Querreihen ausschließlich durch die Veränderung von Steuerungsparametern innerhalb des Steuerprogramms und/oder der Steuerung der Vorrichtung erfolgt.

13. Verfahren nach Anspruch 12, **dadurch gekennzeichnet, dass** die relevanten Steuerungsparameter je Format und/oder Artikelabmessung gespeichert werden und gezielt abgerufen werden können.

14. Verfahren nach einem der Ansprüche 9 bis 13, **dadurch gekennzeichnet, dass** der Aufschubkeil (7) eine Vorwärtsbewegung und eine Rückwärtsbewegung ausführt.

15. Verfahren nach Anspruch 14, **dadurch gekennzeichnet, dass** der Aufschubkeil (7) die Vorwärtsbewegung mit einer ersten und die Rückwärtsbewegung mit einer zweiten Geschwindigkeit ausführt.

16. Verfahren nach Anspruch 15, **dadurch gekennzeichnet, dass** die erste und die zweite Geschwindigkeit gleich sind.

17. Verfahren nach einem der Ansprüche 9 bis 16, **dadurch gekennzeichnet, dass** Einlaufförderer (5) und Hauptförderer (6) jeweils mit eigenen, von einander unabhängigen Geschwindigkeiten angetrieben werden.

## Claims

1. Apparatus for separating, synchronising and compacting for the packing of objects of all kinds, said apparatus having at least one inlet conveyor (5), at least one hold-back wedge (7), at least one main conveyor (6) and at least one compacting unit, wherein the speed of the main conveyor (5) is greater than that of the inlet conveyor, the said apparatus having at least one pair of driving elements (1) disposed so as to rotate, at least one crossbar (2) that is disposed at each pair of driving elements (1) and a controlled drive motor (3) for each pair of driving elements (1), **characterised in that** the at least one pair of driving elements (1) has a controlled sequence of movement that includes different speeds, wherein the structural development of the apparatus is such that the separating is carried out by the hold-back wedge (7) that is displaceable forward and backward and the synchronising and compacting of the objects is carried out by the at least one pair of driving elements (1), and wherein the speed of the main conveyor (6) is constant.

2. Apparatus according to claim 1, **characterised in that** the structural development of the apparatus is such that the crossbars (2) that are disposed on different pairs of driving elements (1) cannot pass one another.

3. Apparatus according to one of claim 1 or 2, **characterised in that** the structural development of the apparatus is such that the crossbars (2) that are disposed on different pairs of driving elements (1) can pass one another.

4. Apparatus according to one of claims 1 to 3, **characterised in that** the at least one pair of driving elements (1) are chains.

5. Apparatus according to one of claims 1 to 3, **characterised in that** the at least one pair of driving elements (1) are toothed belts.

6. Apparatus according to one of claims 1 to 5, **characterised in that** the apparatus includes means, which make it possible for the hold-back wedge (7) to perform the forward and backward movements at different, controlled speeds.

7. Apparatus according to one of claims 1 to 6, **characterised in that** both the inlet conveyor (5) and the main conveyor (6) are each provided with their own drive motor.

8. Apparatus according to one of claims 1 to 7, **characterised in that** the main conveyor (6) is in the form of a one-part, wide conveyor belt that includes a substantially closed surface.

9. Method for the operation of an apparatus in accordance with one of claims 1 to 8, **characterised in that** the sequence of movement of the at least one pair of driving elements (1) and/or the at least one crossbar (2) includes different speeds during one operating cycle.

10. Method according to claim 9, **characterised in that** the at least one crossbar (2) initially holds back the group of objects that is to be separated in relation to the main conveyor (6), then is moved forward at a greater speed, once it reaches the previously separated group of objects synchronizes the said group of objects with the operating cycle of the apparatus and then pushes this group of objects through a compacting unit.

11. Method according to claim 10, **characterised in that** the at least one crossbar (2), once it has separated one group of objects, is initially moved at a speed similar to that of the main conveyor (6), is then advanced at a higher speed, and is then moved once again at a speed similar to that of the main conveyor (6).

12. Method according to one of claim 9 to 11, **characterised in that** the adjusting of the apparatus to changed formats and/or changed article dimensions with an unchanged number of transverse rows is effected exclusively by means of changing the control parameters within the control program, and/or the control of the apparatus.

13. Method according to claim 12, **characterised in that** the relevant control parameters per format and/or object dimension are stored and can be called up as required.

14. Method according one of claims 9 to 13, **characterised in that** the hold-back wedge (7) executes a forward movement and a backward movement.

15. Method according to claim 14, **characterised in that** the hold-back wedge (7) executes the forward movement at a first speed and the backward movement at a second speed.

16. Method according to claim 15, **characterised in** the first speed and the second speed are identical.

17. Method according to one of claims 9 to 16, **characterised in that** the inlet conveyor (5) and the main conveyor (6) are each driven at their own speeds which are independent of each other.

## Revendications

1. Dispositif de séparation, de synchronisation et d'accumulation pour le conditionnement d'articles de tout genre, comportant au moins un convoyeur d'entrée (5), au moins une cale d'admission (7), au moins un convoyeur principal (6) et au moins une unité d'accumulation, la vitesse du convoyeur principal (6) étant supérieure à celle du convoyeur d'entrée, comportant au moins une paire d'éléments d'entraînement (1), agencés de manière à défiler, comportant au moins une barre transversale (2) montée sur chaque paire d'éléments d'entraînement (1), comportant respectivement un moteur d'entraînement (3) commandé pour chaque paire d'éléments d'entraînement (1), **caractérisé en ce qu'**au moins une paire d'éléments d'entraînement (1) comporte une trajectoire de déplacement commandée, possédant différentes vitesses, le dispositif étant construit de telle sorte que la séparation est réalisée par la cale d'admission (7) mobile vers l'avant et l'arrière et la synchronisation et l'accumulation des articles est assurée par la paire d'éléments d'entraînement (1), au nombre d'au moins une, et la vitesse du convoyeur principal (6) étant constante.

2. Dispositif selon la revendication 1, **caractérisé en ce que** la configuration constructive du dispositif est telle que les barres transversales (2), montées sur les différentes paires d'éléments d'entraînement (1), ne peuvent pas se dépasser mutuellement.

3. Dispositif selon la revendication 1 ou 2, **caractérisé en ce que** la configuration constructive du dispositif est telle que les barres transversales (2), montées sur les différentes paires d'éléments d'entraînement (1), peuvent se dépasser mutuellement.

4. Dispositif selon l'une des revendications 1 à 3, **caractérisé en ce qu'**au moins une des paires d'éléments d'entraînement (1) est formée par des chaînes.

5. Dispositif selon l'une des revendications 1 à 3, **caractérisé en ce qu'**au moins une des paires d'éléments d'entraînement (1) est formée par des courroies dentées.

6. Dispositif selon l'une des revendications 1 à 5, **caractérisé en ce que** le dispositif comporte des moyens qui permettent d'effectuer le mouvement vers l'avant et le mouvement vers l'arrière de la cale d'admission (7) avec différentes vitesses commandées.

7. Dispositif selon l'une des revendications 1 à 6, **caractérisé en ce que** le convoyeur d'entrée (5), de même que le convoyeur principal (6) sont équipés avec leur propre moteur d'entraînement.

8. Dispositif selon l'une des revendications 1 à 7, **caractérisé en ce que** le convoyeur principal (6) est réalisé sous forme de large bande de transport d'une seule pièce ayant une surface sensiblement fermée.

9. Procédé de fonctionnement d'un dispositif selon l'une des revendications 1 à 8, **caractérisé en ce que** la trajectoire de déplacement de ladite au moins une paire d'éléments d'entraînement (1) et/ou de ladite au moins une barre transversale (2) a des vitesses différentes pendant un cycle de travail.

10. Procédé selon la revendication 9, **caractérisé en ce que** ladite au moins une barre transversale (2) retient d'abord par rapport au convoyeur principal (6) les groupes d'articles à séparer, se déplace ensuite avec une vitesse plus élevée, synchronise les groupes d'articles précédemment séparés une fois que ceux-ci ont atteint la cadence de travail du dispositif et pousse ensuite ces groupes d'articles à travers une unité d'accumulation.

11. Procédé selon la revendication 10, **caractérisé en ce que**, après la séparation d'un groupe d'articles, ladite au moins une barre transversale (2) se déplace d'abord avec une vitesse analogue à celle du convoyeur principal (6), se déplace ensuite avec une vitesse plus élevée, et se déplace ensuite à nouveau avec une vitesse analogue à celle du convoyeur principal (6).

12. Dispositif selon l'une des revendications 9 à 11, **caractérisé en ce que** l'adaptation du dispositif à des formats modifiés et/ou des dimensions d'articles modifiées sans que le nombre de rangées transversales ait été modifié est effectuée exclusivement par la variation des paramètres de commande à l'intérieur du programme de commande et/ou de la commande du dispositif.

13. Dispositif selon la revendication 12, **caractérisé en ce que** les paramètres de commande significatifs pour chaque format et/ou dimension d'article sont mémorisés et peuvent être chargés de manière ciblée.

14. Dispositif selon l'une des revendications 9 à 13, **caractérisé en ce que** la cale d'admission (7) effectue un mouvement d'avance et un mouvement de recul.

15. Dispositif selon la revendication 14, **caractérisé en ce que** la cale d'admission (7) effectue le mouvement d'avance avec une première vitesse et le mouvement de recul avec une deuxième vitesse.

16. Dispositif selon la revendication 15, **caractérisé en ce que** la première et la deuxième vitesse sont identiques.

17. Dispositif selon l'une des revendications 9 à 16, **caractérisé en ce que** le convoyeur d'entrée (5) et le convoyeur principal (6) sont entraînés chacun avec leurs propres vitesses, indépendantes l'une de l'autre.
